# EUROPEAN PATENT APPLICATION

(11) **EP 1 321 917 A1**
(43) Date of publication of application: **25.06.2003**
(21) Application number: 01830777.7
(22) Date of filing: 19.12.2001
(51) Int. Cl.: G09B 19/08, G09B 19/00

(54) **Compositive book structure, particularly for a school book, and a method for the composition thereof**

(71) Applicant: Canepa, Cecilia, 20121 Milano MI (IT)
(72) Inventor: Canepa, Cecilia, 20121 Milano MI (IT)
(74) Representative: Perani, Aurelio

(57) **Abstract**

Compositive textbook structure for teaching a predetermined subject and for a predetermined level of learning, comprising a first section consisting of a relative first support, containing a set of basic concepts relative to said subject according to the level of learning, a second section consisting of a relative second support, containing a set of specialising information of said subject and according to the level of learning, said second support being chosen from a plurality of supports each containing different sets of specialising information, as well as at least one third section consisting of a relative third support containing a set of specific information on said subject according to the level of learning, said third support being chosen from a plurality of supports each containing its own different set of specific information made available by didactic experts of the given subject.

The structure comprises, moreover, at least one fourth section consisting of a relative fourth support containing a set of guidance instructions for the teacher of said subject according to the level of learning, said fourth support being chosen from a plurality of supports each containing a different set of guidance instructions.

Said supports of concepts and/or information can be on paper material just as they can be of the electronic and/or magnetic type and be suitable for an on-line or off-line multimedia distribution.

## Description

The present invention refers to a compositive book structure, particularly but not exclusively for a school book, and to the method for the compilation thereof

As is known, text books used in schools, particularly in primary and secondary schools, the so-called compulsory schools, are chosen and adopted by teachers of the various subjects above all upon the basis of general principles dictated by ministerial programmes and secondly according to the particular didactic objectives which each teacher desires to achieve.

Conventionally, text books are taken care of by specialised publishers which provide teachers institutes and teachers with a vast range of books from which they can choose and adopt those which they want.

Clearly this is true for each subject with the necessary variants according to the grade of school, of its particular specialisation, for example classical, scientific, technical or business.

In the attempt to propose texts which can be used by the maximum number of teachers of the same discipline, publishers are necessarily forced to formulate a content which tries to mediate between the various didactic requirements.

The main drawback which is noted in the current school textbook publishing system and therefore in the books themselves, consists of an undoubted rigidity of the contents which adapt badly to the high-flexibility requirements of the current school programs which will reflect the autonomy of individual teachers and schools to an ever greater degree.

Currently, indeed, teachers and school officials are forced to adopt predefined textbooks the content of which is at times redundant and other times totally insufficient with respect to the teaching programme which, in their autonomy, they have decided for a given subject.

From this it follows that, not finding a text which is capable of satisfying the teaching requirements, the users are forced to have recourse to integrations, forming them, for example, under the form of personal notes or else partially exploiting other texts which, although comprising the integrations sought after, also include other themes which, most of the time, are not at all sought after nor necessary.

The integration can also take place through photocopying of texts even of many copies (for example, one per pupil) with the infraction of the current laws regarding copyright law as well as with a deterioration of the graphical and material quality.

Such practice, widely used, brings inevitable worsening of costs, inconvenience and harm to learning, teachers and school heads.

The purpose of the present invention is that of creating a compositive textbook structure which offers a high flexibility of composition, as far as its content is concerned, so as to take account of the didactic autonomy of teachers in organising both the basic teaching and extra activities, giving, moreover, a substantial economic saving in its use with respect to that of conventional texts.

A second purpose is that of offering a paper product (for example with evolved printing solutions upon request) which has the same level of quality in presentation, binding and durability as conventional school books.

A third purpose of the present invention is that of creating a compositive textbook structure which also allows an interaction between teachers and publishers as well as between teachers, even those working at different schools, through the participation in the formation of the content of the book with thematic work and specialisation produced by them.

The aforementioned purposes are achieved by the compositive textbook structure and by the method for its composition, according to the invention, in accordance with the attached claims.

The invention shall now be described some more with reference to the practical embodiment, given only as an indication and not for limiting purposes, shown hereafter.

### Example 1

A history book has been prepared to be adopted in the lower years of secondary school for the overall cycle of three years. A first section has been made available containing basic concepts for 384 pages. To such a first section a second section has been added consisting of 48 folders in which each folder includes the reinforcement of basic concepts and themes of specialisation. Such folders have been chosen, by the teacher which intended to adopt the text, from a series of already prepared specialisation modules whose overall number of pages was well above that of a conventional book. From all of such pages, the person selecting has chosen at least 384. Finally, to the aforementioned section a third section has been added consisting of one folder of 16 pages containing didactic materials produced autonomously by the teacher adopting the text. In the example described, the textbook, covering the whole three-year cycle of lower secondary school, was composed of 784 pages, of which a large part is also in colour, the content of which strictly adhered to the didactic needs, without missing parts, nor redundant parts, therefore having a high specific weight as far as the content is concerned, with a substantial economic advantage with respect to a textbook, for the same subject, offered by the traditional publisher which, on average, consists of three volumes for a total of over one thousand pages of which many inevitably are not covered by the teacher.

### Example 2

A history textbook has been prepared for secondary schools like the one described in example 1.

To the compositive structure of the book a fourth section of 64 pages has been added containing instructions which allow the teacher to compose the vast material available in different didactic paths suited to their specific needs.

Also with the addition of such a further section, the textbook was more efficient and furkhermore extremely cost-effective with respect to a corresponding textbook offered by conventional publishers.

### Example 3

A textbook, for example for history, to be used by secondary schools, was prepared as specified in examples 1 and 2 on paper.

It was integrated with a section containing subsidiary information to the teaching of history, such as documentational and didactic iconographic material, exercises, as well as tests for the evaluation of learning. The aforementioned information have been placed on a support of the electronic and/or magnetic type suitable for use in on-line multimedia systems from which they can also be downloaded, for free or else with a charge, according to commercial choices.

### Example 4

A history textbook like the one of the previous examples has been integrated with a section relative to guidance instructions for the teacher in which such instructions have been placed on a support of the electro-mechanical type such as a CD-ROM for multimedia distribution of the off-line type.

From the practical embodiment of the invention described previously one can appreciate that the compositive structure and the method for the realisation of the textbook according to the invention offers numerous advantages with respect to textbooks from conventional publishing.

First of all a total number of pages limited to those which are actually necessary to outline the basic concepts of a certain subject, to contain the information necessary for it to be tackled in greater depth, this information, moreover, being limited to that which the teacher intends to develop to achieve his own teaching objective.

Moreover, the proposed textbook structure can be modified by the teacher, with the addition of supplementary modules which are still homogenous with those which are already present in the structure, upon the basis of the didactic requirements which come up during the course of the school year.

Finally, the insertion on electronic and/or magnetic supports of all or part of the concepts and information of the sections which comprise the structure of the book according to the invention, determines the advantage of allowing the on-line or off-line multimedia exchange thereof with a possible increase in the quality and in the reach of the informative contents following the collaboration between the users which such a multimedia exchange involves.

## Claims

1. Compositive textbook structure for teaching a predetermined subject and for a predetermined level of learning, **characterised in that** it comprises a first section consisting of a relative first support, containing a set of basic concepts relative to said subject according to the level of learning, a second section consisting of a relative second support, containing a set of specialising information of said subject and according to the level of learning, said second support being chosen from a plurality of supports each containing different sets of specialising information, as well as at least one third section consisting of a relative third support containing a set of specific information on said subject according to the level of learning, said third support being chosen from a plurality of supports each containing its own different set of specific information made available by didactic experts of the given subject.

2. Compositive textbook structure according to claim 1, **characterised in that** said specific information contained in said third support is produced autonomously by the teacher of said subject, using the textbook.

3. Compositive structure according to claim 1, **characterised in that** said specific information contained in said third support is produced by a teacher of said subject without using the specific textbook.

4. Compositive textbook structure according to claims 1 to 3, **characterised in that** it includes at least one fourth section consisting of a relative fourth support containing a series of guidance instructions for the teacher of said subject according to the level of learning, said fourth support being chosen from a plurality of supports each containing a different series of guidance instructions.

5. Compositive textbook structure according to claims 1 to 4, **characterised in that** it includes at least one fifth section consisting of a respective fifth support containing subsidiary information to the given subject and to the level of learning chosen from information regarding bibliographic data, exercises with or without solutions, learning tests and the like.

6. Compositive textbook structure according to claims 1 to 5, **characterised in that** said supports are of the paper type with printing, binding and durability characteristics no less than conventional textbooks.

7. Compositive textbook structure according to claims 1 to 5, **characterised in that** said supports are of the electronic type.

8. Compositive textbook structure according to claims 1 to 5, **characterised in that** said supports are of the magnetic type.

9. Method for the composition of a textbook for a given subject **characterised in that** it comprises the steps of providing a first section consisting of a relative first support containing a series of basic concepts relative to said subject and according to the level of learning, of providing a second section consisting of a relative second support, containing a set of specialising information of said subject according to the level of learning, said second support being chosen from a plurality of supports each containing different sets of specialising information, as well as of providing at least one third section consisting of a relative third support containing a set of specific information on said subject, according to the level of learning, said third support being chosen from a plurality of supports each containing its own different set of specific information provided by didactic experts of the given subject.

10. Method according to claim 9 **characterised in that** it includes the step of providing at least one fourth section consisting of a relative fourth support containing a set of guidance instructions for the teacher of said subject, according to the level of learning, said fourth support being chosen from a plurality of supports each containing a different set of guidance instructions.

11. Method according to claims 9 and 10 **characterised in that** it comprises the step of providing at least one fifth section consisting of a respective fifth support containing subsidiary information to the given subject and to the level of learning chosen from information regarding bibliographic data, exercises with or without solutions, learning tests and the like.
